# EUROPEAN PATENT APPLICATION

(11) **EP 4 741 587 A1**
(43) Date of publication of application: **13.05.2026**
(21) Application number: 25211537.3
(22) Date of filing: 28.10.2025
(51) Int. Cl.: E02F 9/22

(54) **WORKING MACHINE**

(30) Priority: 07.11.2024 KR 20240157190
(71) Applicant: Volvo Construction Equipment AB, 631 85 Eskilstuna (SE)
(72) Inventor: KO, Jinwoo, 51710 GYEONGSANGNAM-DO (KR); KANG, Sangseok, 51710 GYEONGSANGNAM-DO (KR)
(74) Representative: Kransell & Wennborg KB

(57) **Abstract**

A working machine may comprise a tank; a working device including an actuator; an accumulator; a recovery path connecting the actuator and the accumulator; a return valve installed between the recovery path and the tank to control the flow rate of fluid discharged from the recovery path to the tank; a command generating device that generates a command; and a control unit that receives the command from the command generating device and controls the return valve so that the return valve has an opening amount corresponding to the command according to a preset relationship, thereby adjusting the operating speed of the actuator and the charging speed of the accumulator. The command generating device may be a first operator input device that receives a request from an operator for one of the operating speed of the actuator, the charging speed of the accumulator, and the opening amount of the return valve. As the requested operating speed input to the first operator input device becomes faster, the control unit may control the return valve to have a larger opening amount. The command generating device may be a sensor that detects the position of a predetermined portion of the working device. As the position of the predetermined portion of the working device detected by the sensor becomes lower, the control unit may control the return valve so that the return valve has a larger opening amount.

## Description

### Technical Field

The present invention relates to a working machine, and more particularly, to a working machine capable of efficiently increasing the operating speed of a working device while efficiently recovering energy discharged from a boom actuator.

### Background Technology

A working machine is a device that performs work by supplying high-pressure pressurized fluid to (an actuator of) a working device. To improve the fuel efficiency of such working machines, a technology has been proposed that recovers energy from the fluid discharged from the boom actuator. However, since energy recovery efficiency and the operating speed of the working device are in a trade-off relationship, there was a limitation that increasing the energy recovery efficiency would slow down the operating speed of the working device, and conversely, increasing the operating speed of the working device would lower the energy recovery efficiency.

### Summary of the invention

### Means of solving the problems

According to a first aspect of the present disclosure, there is provided a working machine comprising: a tank; a working device including an actuator;

An accumulator; a recovery path connecting the actuator and the accumulator; a return valve installed between the recovery path and the tank to control the flow rate of fluid discharged from the recovery path to the tank; a command generating device that generates a command; and a control unit that receives the command from the command generating device and controls the return valve so that the return valve has an opening amount corresponding to the command according to a preset relationship, thereby adjusting the operating speed of the actuator and the charging speed of the accumulator. This working machine has an advantage of efficiently increasing the operating speed of the working device while efficiently recovering the energy discharged from the boom actuator.

According to some embodiments, the command generating device is a first operator input device that receives a request from an operator for one of the operating speed of the actuator, the charging speed of the accumulator, and the opening amount of the return valve, and the control unit can control the opening amount of the return valve according to the request.

According to some embodiments, the first operator input device selectively receives, from the operator, at least a request for a first operating speed and a request for a second operating speed of the actuator, wherein the second operating speed is faster than the first operating speed, and the control unit controls the return valve to have a first opening amount according to the request for the first operating speed, and controls the return valve to have a second opening amount according to the request for the second operating speed, wherein the second opening amount may be larger than the first opening amount.

According to some embodiments, the faster the requested operating speed input to the first operator input device, the more the control unit can control the return valve to have a larger opening amount.

According to some embodiments, the command generating device is a sensor that detects the position of a predetermined portion of the working device, and the control unit can control the opening amount of the return valve according to the position of the predetermined portion of the working device detected by the sensor.

According to some embodiments, the predetermined portion of the working device may be a bucket.

According to some embodiments, the control unit at least controls the return valve to have a third opening amount when the predetermined portion of the working device is at a third position, and controls the return valve to have a fourth opening amount when the predetermined portion of the working device is at a fourth position, wherein the fourth position is at lower height than the third position and the fourth opening amount may be larger than the third opening amount.

According to some embodiments, the lower the position of the predetermined portion of the working device detected by the sensor, the more the control unit can control the return valve so that the return valve has a larger opening amount.

According to some embodiments, the third position and the fourth position may be lower than a preset reference height.

According to some embodiments, the reference height is the floor height of the working machine, and the third position and the fourth position may be at positions lower than the floor of the working machine.

According to some embodiments, when the predetermined portion of the working device is at a position higher than or equal to the reference height, the control unit controls the return valve so that the return valve has a constant opening amount, wherein the constant opening amount may be smaller than both the third opening amount and the fourth opening amount.

According to some embodiments, the actuator is a boom actuator, and the working machine further comprises a second operator input device for receiving a request for raising/lowering a boom of the boom actuator from an operator, and the flow of fluid from the boom actuator to the recovery path can only occur when a boom down request for lowering the boom is input to the second operator input device.

According to some embodiments, the working machine further comprises a third operator input device that receives an energy recovery function activation request from an operator to activate an energy recovery function that recovers energy from fluid discharged from the boom actuator, and the flow of fluid from the boom actuator to the recovery path can only occur when the energy recovery function activation request is input to the third operator input device.

According to some embodiments, the working machine further comprises a directional control valve installed between the boom actuator and the tank to selectively discharge fluid from the boom actuator into the tank, wherein when the energy recovery function activation request is input to the third operator input device and the boom down request is input to the second operator input device, the directional control valve can prevent fluid from being discharged from the boom actuator to the tank.

According to some embodiments, the working machine further comprises a pump for drawing fluid from the tank and pressurizing it, and a directional control valve installed between the pump and the boom actuator to selectively supply pressurized fluid from the pump to the boom actuator, wherein when the energy recovery function activation request is input to the third operator input device and the boom down request is input to the second operator input device, the directional control valve can prevent pressurized fluid from being supplied from the pump to the boom actuator.

According to some embodiments, the working machine further comprises a directional control valve installed between the boom actuator and the tank to selectively discharge fluid from the boom actuator into the tank, wherein when the boom down request is input to the second operator input device while the energy recovery function activation request is not input to the third operator input device, the directional control valve can cause fluid to be discharged from the boom actuator to the tank.

According to some embodiments, the working machine further comprises a pump for drawing fluid from the tank and pressurizing it, and a directional control valve installed between the pump and the boom actuator to selectively supply pressurized fluid from the pump to the boom actuator, wherein when the boom down request is input to the second operator input device while the energy recovery function activation request is not input to the third operator input device, the directional control valve can cause pressurized fluid to be supplied from the pump to the boom actuator.

According to some embodiments, the actuator is a boom actuator having a bottom chamber and a load chamber, and the recovery path can be connected to the bottom chamber.

According to some embodiments, the working machine may further include an assist motor connected to the accumulator.

According to some embodiments, the actuator is a boom actuator, and the operating speed of the actuator may be a speed at which the boom of the boom actuator is lowered.

The above aspects, the appended claims and the examples disclosed herein either above or below may be appropriately combined with each other, and this will be apparent to a person skilled in the art.

Additional features and advantages are disclosed in the following description, claims and drawings, and additional features and advantages will to some extent be apparent to a person skilled in the art without difficulty or may be understood by implementing the disclosure described herein.

### [Brief Description of Drawings]

FIG. 1 is a drawing showing the appearance of a working machine according to some embodiments.
FIG. 2 is a drawing showing a circuit diagram of a working machine according to some embodiments.
FIG. 3 is a drawing showing an example of a preset correspondence between an input of a first operator input device of a working machine and an opening amount of a return valve according to some embodiments.
FIG. 4 is a drawing showing an example of a preset correspondence between the position of a bucket and the opening amount of a return valve in a working machine according to some embodiments.

### DETAILED DESCRIPTION OF THE INVENTION

Aspects of the present disclosure, cited as examples, are described in detail below with reference to the attached drawings. The aspects described below provide information necessary to enable a person of ordinary skill in the art to practice the present disclosure.

The present disclosure is applicable to a hydraulic system, particularly the hydraulic system of a working machine in the field of industrial construction machinery, material handling machinery or construction equipment, particularly wheel loaders and excavators. Although the present disclosure will be primarily described with respect to excavators, the present disclosure is not limited to this particular machine and may also be used in other working machines including hydraulic systems, such as shovels, wheel loaders, and backhoe loaders.

Hydraulic systems are used in a wide range of applications. For example, working machines typically rely on hydraulic systems to provide power to handle loads. A hydraulic system for a working machine may include various hydraulic actuators, such as hydraulic cylinders and hydraulic motors. Hydraulic cylinders may be provided for operating working devices, including, for example, booms, arms and/or buckets. Hydraulic motors can be used, for example, for propulsion and/or swinging of working machines.

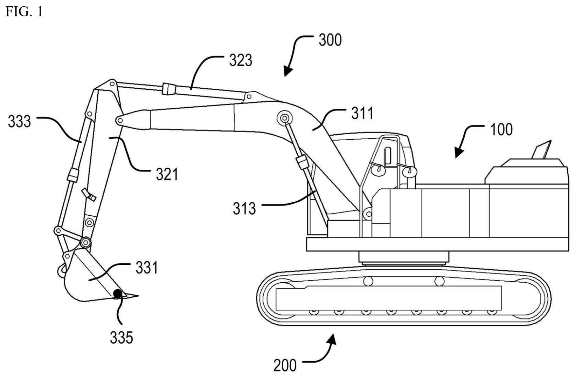

FIG. 1 is a drawing showing the appearance of a working machine according to some embodiments.

The working machine can perform work by operating the working device 300 using hydraulic pressure. In some embodiments, the working machine may be a construction machine.

In some embodiments, the working machine may be an excavator as illustrated in FIG. 1. The working machine may include an upper structure 100, a lower structure 200, and a working device 300.

The lower structure 200 includes a drive actuator to enable the working machine to drive. The drive actuator may be a hydraulic motor.

The upper structure 100 may include a pump, a tank, a power source, a directional control valve, and the like. Additionally, the upper structure 100 can rotate relative to the lower structure 200 by including a swivel actuator. The swivel actuator may be a hydraulic motor.

The working device 300 enables the excavator to perform work. The working device 300 may include a boom 311, an arm 321, and a bucket 331, and a boom actuator 313, an arm actuator 323, and a bucket actuator 333 that operate them. The boom actuator 313, arm actuator 323 and bucket actuator 333 may be hydraulic cylinders.

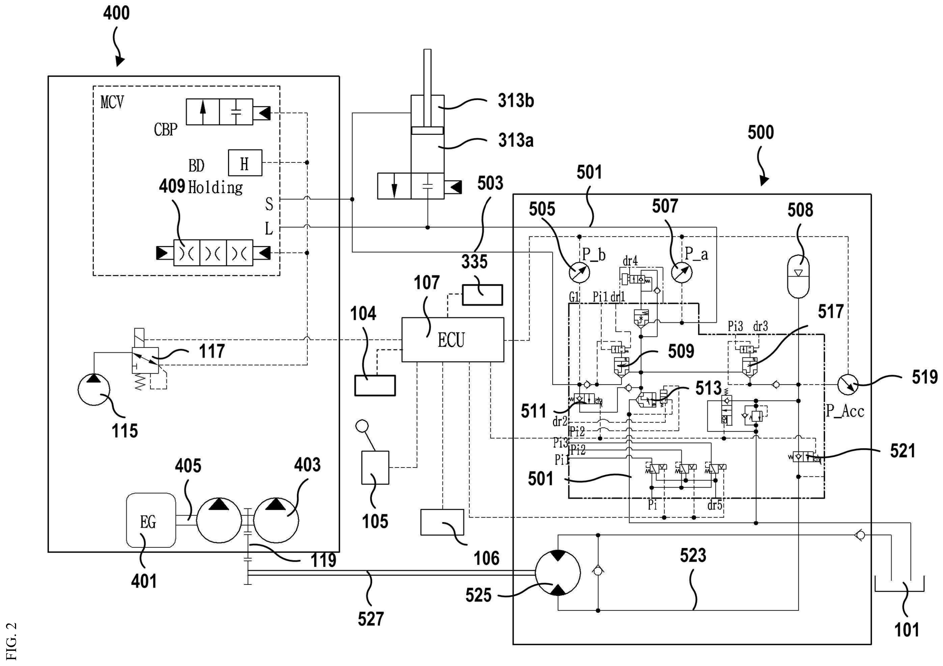

FIG. 2 is a drawing showing a circuit diagram of a working machine according to some embodiments.

In some embodiments, the working machine may include an actuator, an energy recovery circuit 500, a tank 101, and a control unit 107. An energy recovery circuit 500 may be provided between the actuator and the tank 101. In some embodiments, the actuator may have a bottom chamber 313a and a load chamber 313b. In some embodiments, the actuator may be a boom actuator. However, the present disclosure is not necessarily limited thereto. For convenience of explanation, the following description will be based on an example in which the actuator is a boom actuator.

In some embodiments, the working machine may include an energy consumption circuit 400. The energy consumption circuit 400 is also provided between the actuator and the tank 101.

The energy recovery circuit 500 is connected to the actuator and can recover energy from fluid discharged from the actuator. The energy recovery circuit 500 may include an accumulator 508, a recovery path 501, a return valve 513, and a command generating device. The recovery path 501 can connect the bottom chamber 313a of the actuator and the accumulator 508. The return valve 513 is installed between the recovery path 501 and the tank 101 to control the flow rate of fluid discharged from the recovery path 501 to the tank 101. The command generating device generates a command, and the control unit 107 receives a command from the command generating device and controls the return valve 513 so that the return valve 513 has an opening amount corresponding to the command according to a preset relationship, thereby controlling the operating speed of the actuator. Additionally, in some embodiments, the energy recovery circuit 500 may further include a regeneration valve 509, a charging valve 517, a discharge valve 521, and an assist motor 525.

The energy consumption circuit 400 is a circuit connected to the actuator, which supplies pressurized fluid to the actuator or returns fluid discharged from the actuator to the tank 101. In some embodiments, the energy consumption circuit 400 may include a power source 401, a main pump 403, and a directional control valve 409. The main pump 403 can draw fluid from the tank 101 and then pressurize it to make pressurized fluid and supply it. The directional control valve 409 may be installed between the main pump 403 and the actuator to selectively supply pressurized fluid from the main pump 403 to the actuator. The power source 401 can operate the pump. In some embodiments, the power source 401 may include an engine.

In some embodiments, the working machine may normally operate the working device using the energy consumption circuit 400, and may recover energy using the energy recovery circuit 500 when it wishes to perform an energy recovery function.

In some embodiments, the power source 401 may operate the main pump 403 by transmitting power to the main pump 403 through the main shaft 405. The main pump 403 can draw fluid from the tank 101, pressurize it to make pressurized fluid, and supply it to the actuator. The actuator can receive pressurized fluid from the main pump 403 while returning the fluid to the tank 101. The actuator can operate a working device, such as a boom, an arm, a bucket, and the like, by providing the force of pressurized fluid received from the main pump 403 to the working device.

In a cylinder-shaped actuator as illustrated in FIG. 2, since the piston rod penetrates the load chamber 313b, the area where the fluid in the load chamber 313b comes into contact with the piston is smaller than the area where the fluid in the bottom chamber 313a comes into contact with the piston due to the area occupied by the piston rod. Referring also to FIG. 1, in an embodiment where the actuator is a boom actuator, during a boom down operation in which the boom is lowered, the piston rod is also lowered, thus causing fluid to flow into the load chamber 313b and discharging the fluid within the bottom chamber 313a.

The directional control valve 409 connects the main pump 403, the tank 101, and the actuator, and can control the direction of fluid flow between them. In some embodiments, the directional control valve 409 can be in a neutral position and a first non-neutral position or a second non-neutral position. When in the neutral position, the directional control valve 409 blocks fluid communication with the actuator and allows fluid from the main pump 403 to return to the tank 101 through the central bypass passage. When the directional control valve 409 is in the first non-neutral position, the directional control valve 409 blocks the fluid from the main pump 403 from returning to the tank 101 through the central bypass passage, sends the fluid from the main pump 403 to the load chamber 313b, and sends the fluid from the bottom chamber 313a to the tank 101, thereby lowering the boom. When the directional control valve 409 is in the second non-neutral position, the directional control valve 409 blocks the fluid from the main pump 403 from returning to the tank 101 through the central bypass passage, sends the fluid from the main pump 403 to the bottom chamber 313a, and sends the fluid from the load chamber 313b to the tank 101, thereby raising the boom.

In some embodiments, the working machine may include a second operator input device 105 to switch the directional control valve 409. The operator can input his/her own request to raise or lower the boom by operating the second operator input device 105. In some embodiments, the second operator input device 105 may be a lever, but the present invention is not limited thereto.

In some embodiments, the second operator input device 105 is an electrical input device and can generate an electrical signal corresponding to an operator's request and send it to the control unit 107. In some of these embodiments, the working machine may include a pilot pump 115 and an electronic proportional pressure reducing valve 117 (another electronic proportional pressure reducing valve is required in addition to the electronic proportional pressure reducing valve 117 illustrated to switch the directional control valve 409 to the first non-neutral position and the second non-neutral position, but is not shown in FIG. 2). When receiving an electric signal from the second operator input device 105, the control unit 107 can send a control signal to the electronic proportional pressure reducing valve 117 to operate the electronic proportional pressure reducing valve 117. When an operator's input to switch the directional control valve 409 to the first position is input to the second operator input device 105, the electronic proportional pressure reducing valve 117 can switch the directional control valve 409 to the first position by sending the pilot fluid from the pilot pump 115 to the load chamber 313b through the directional control valve 409. On the other hand, when an operator's input to switch the directional control valve 409 to the second position is input to the second operator input device 105, the electronic proportional pressure reducing valve 117 blocks the flow of pilot fluid from the pilot pump 115 to the directional control valve 409, and allows the pilot fluid provided to the directional control valve 409 to be drained (at this time, another electronic proportional pressure reducing valve described above can switch the directional control valve 409 to the second position by sending the pilot fluid from the pilot pump 115 to the bottom chamber 313a of the actuator through the directional control valve 409).

A return valve 513 is provided between the recovery path and the tank 101 to allow or block the flow of fluid from the recovery path 501 to the tank 101. The regeneration valve 509 can connect the recovery path 501 and the load chamber 313b to allow or block the flow of fluid from the recovery path 501 to the load chamber 313b. The charging valve 517 is provided on the recovery path 501 between the bottom chamber 313a and the accumulator 508 to allow or block the flow of fluid from the bottom chamber 313a to the accumulator 508.

The assist motor 525 can assist the power source 401 by supplying power obtained from the pressurized fluid supplied from the accumulator 508 to the energy consumption circuit 400. To this end, in some embodiments, the working machine may include a power transmission unit. The power transmission unit is connected to the pump, the power source 401, and the assist motor, so as to transmit power between the pump, the power source 401, and the assist motor. In some embodiments, the power transmission unit may include a main shaft 405 connecting the power source and the pump, an assist shaft 527 connected to the assist motor, and a power transmission mechanism 119. In some embodiments, the power transmission mechanism 119 may include a gear train as illustrated in FIG. 2. However, the present invention is not limited thereto and may have various other embodiments.

In some embodiments, the working machine may include a third operator input device 106 that receives a request from the operator to activate (turn on) or deactivate (turn off) an energy recovery function that recovers energy from fluid discharged from the boom actuator.

The flow of fluid from the boom actuator to the recovery path 501 can only occur when a boom down request, in which the boom is lowered, is input to the second operator input device 105. Additionally, the flow of fluid from the boom actuator to the recovery path 501 can only occur when a request to activate the energy recovery function is input to the third operator input device 106.

When a request to activate the energy recovery function is input to the third operator input device 106 and a request for boom down operation is input to the second operator input device 105, the directional control valve 409 can prevent pressurized fluid from being supplied from the pump 403 to the boom actuator.

On the other hand, when a request to activate the energy recovery function is not input to the third operator input device 106 and a request for boom down operation is input to the second operator input device 105, the directional control valve 409 can cause fluid to be discharged from the boom actuator to the tank 101 through the directional control valve 409.

Specifically, when a boom down request is input to the second operator input device 105 while a request to turn on the energy recovery function is input to the third operator input device 106, the control unit 107 controls the electronic proportional pressure reducing valve 117 to prevent pilot fluid from being supplied to the directional control valve 409, thereby switching the directional control valve 409 to a neutral position, thereby blocking the flow of fluid between the actuator and the energy consumption circuit 400. Accordingly, with the energy recovery function turned on, the boom down operation can be performed only by its own weight without supplying pressurized fluid from the pump, and the fluid discharged from the load chamber 313a can be supplied to the energy recovery circuit 500, i.e., the recovery path 501, instead of the energy consumption circuit 400. When a request to turn off the energy recovery function is input to the third operator input device 106, the control unit 107 can switch the return valve 513, the regeneration valve 509, and the charging valve 517 to block the flow of fluid between the actuator and the energy recovery circuit 500.

In some embodiments, during a boom down operation, the regeneration valve 509 may be operated to allow regeneration flow of fluid from the bottom chamber 313a to the load chamber 313b. During a boom down operation, the charging valve 517 can be operated to allow fluid flow from the bottom chamber 313a to the accumulator 508.

In some embodiments, the energy recovery circuit 500 may include a recovery path 501 and a regeneration path 503. As described above, the recovery path 501 can connect the bottom chamber 313a and the accumulator 508 to allow the flow of fluid from the bottom chamber 313a to the accumulator 508. The regeneration path 503 can be connected to the load chamber 313b.

In some embodiments, a return valve 513 may be provided between the recovery path 501 and the tank 101 to allow or block the flow of fluid from the bottom chamber 313a to the tank 101. In some embodiments, the regeneration valve 509 is connected to the recovery path 501 and the regeneration path 503 to allow or block the flow of fluid from the recovery path 501 to the regeneration path 503.

In some embodiments, the energy recovery circuit 500 may include an assist path 523 connecting the bottom chamber 313a and the assist motor 525. In some embodiments, the assist path 523 may connect the accumulator 508 and the assist motor 525 to allow fluid flow from the accumulator 508 to the assist motor 525. In some embodiments, a discharging valve 521 may be provided on the assist path 523. The discharging valve 521 can allow or block the flow of fluid from the accumulator 508 to the assist motor 525 through the assist path 523.

In some embodiments, the working machine may include a first sensor 507 for measuring a first pressure in the bottom chamber 313a and a second sensor 505 for measuring a second pressure in the load chamber 313b.

Unexplained drawing symbol 511 represents a valve, and 519 represents a pressure sensor.

In FIG. 2, an embodiment is shown in which the second operator input device 105 is an electric input device, but in some alternative embodiments, the second operator input device is a hydraulic input device incorporating a pressure reducing valve, and the working machine may include an auxiliary valve. In these embodiments, the pilot pump 115 is connected to a pressure reducing valve of the second operator input device, and the pressure reducing valve can send a hydraulic signal corresponding to an operator's request input through the second operator input device to the auxiliary valve. In some embodiments, the working machine includes a sensor capable of measuring the pressure of a hydraulic signal sent from the pressure reducing valve to the auxiliary valve, and the sensor can generate an electrical signal corresponding to the hydraulic signal and provide it to the control unit 107. Accordingly, even if the control unit 107 is not directly connected to the second operator input device, the control unit 107 can identify whether there is any request from the operator, i.e., whether there is a request for a boom down operation or a request for a boom up operation. When a request to turn off the energy recovery function is input through the third operator input device 106, the hydraulic signal generated by the second operator input device can be provided to the directional control valve 409 through the auxiliary valve. However, when a request to turn on the energy recovery function is input through the third operator input device 106, the control unit 107 controls the auxiliary valve to prevent the pilot fluid from being supplied to the directional control valve 409, thereby switching the directional control valve 409 to a neutral position, thereby blocking the flow of fluid between the actuator and the energy consumption circuit 400.

In some embodiments, the working machine may include a sensor 335 that detects the position of the bucket.

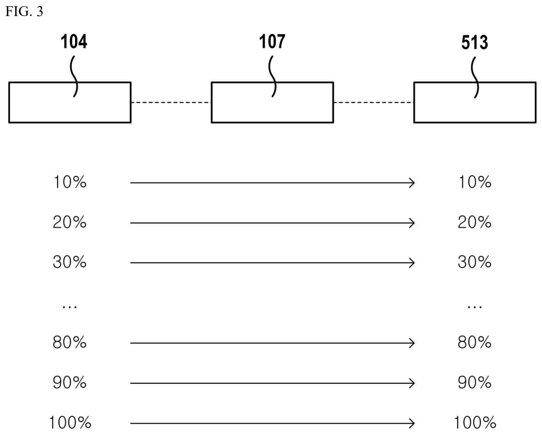

FIG. 3 is a drawing showing a preset correspondence between an input of a first operator input device of a working machine and an opening amount of a return valve according to some embodiments.

In some embodiments, the command generating device may be a first operator input device 104 that receives a request for an operating speed of the actuator from an operator. The control unit 107 can control the opening amount of the return valve 513 according to the above request. In some embodiments, the first operator input device 104 selectively receives, from the operator, at least a request for a first operating speed and a request for a second operating speed of the actuator, and the control unit 107 controls the return valve 513 to have a first opening amount according to the request for the first operating speed, and controls the return valve 513 to have a second opening amount according to the request for the second operating speed. Here, the second operating speed may be faster than the first operating speed, and the second opening amount may be larger than the first opening amount. As the requested operating speed input to the first operator input device 104 is faster, the control unit 107 can control the return valve 513 so that the return valve 513 has a larger opening amount.

For equipment with energy recovery function, since boom down control performance and fuel efficiency improvement effect are in a trade-off relationship, the return valve 513 is opened more if boom down control performance is improved, which reduces the flow rate charged to the accumulator and adversely affects fuel efficiency. Conversely, closing the return valve 513 to increase the charging pressure of the accumulator raises the charging pressure, which positively impacts fuel efficiency, but the pressures of the bottom chamber and load chamber of the boom actuator and accumulator become constant, so the boom down speed does not remain constant, but stops and then slows down again.

Because customers' equipment usage requirements vary, the ability to choose better fuel efficiency or better boom-down control performance to suit site conditions or operator preferences will expand the range of equipment applications. To this end, for example, by receiving a step signal consisting of a total of 7 steps of S3/S2/S1/N/F1/F2/F3 through the first operator input device 104 and adjusting the boom down speed, it is possible to achieve a boom down operating speed that meets the operator's requirements and, at the same time, improve fuel efficiency accordingly. In other words, as accumulator pressure increases, back pressure resisting boom down also increases, causing the boom down speed to slow down dramatically, thus, the goal is to allow customers to selectively utilize boom down speed and energy efficiency to achieve optimal energy recovery under optimal conditions.

By controlling the opening amount of the return valve 513 according to the request input to the first operator input device 104, the ratio of the flow rate going to the tank through the return valve 513 and the flow rate going to the accumulator can be controlled, thereby selecting whether to fill the accumulator quickly or slowly.

For example, if the return valve 513 opens by 10% in response to the operator's request, the return valve opens relatively little during boom down to ground level, causing the accumulator to be filled quickly, and if it opens by 100%, the return valve 513 opens relatively wide during boom down to ground level, causing the accumulator to be filled slowly.

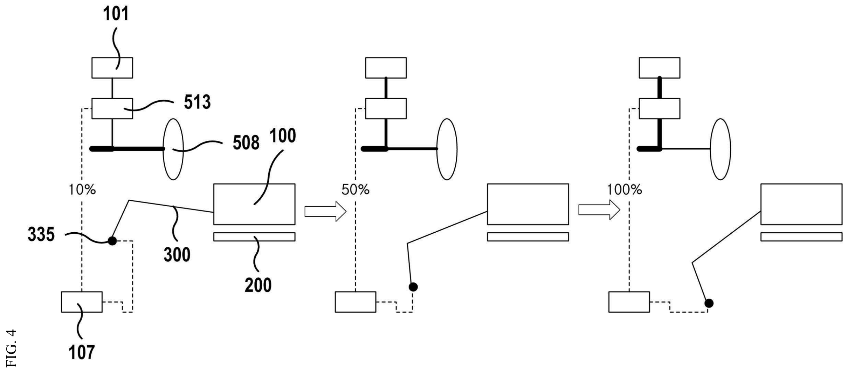

FIG. 4 is a drawing showing a preset correspondence between the position of a bucket and the opening amount of a return valve in a working machine according to some embodiments.

In some embodiments, the command generating device may be a sensor that detects the position of a predetermined portion of the working device (e.g., a sensor 335 that detects the position of a bucket 331 as shown in FIGs. 1 and 2), and the control unit 107 may control the opening amount of the return valve 513 according to the position of the predetermined portion of the working device detected by the sensor 335. In some embodiments, for example, an inertial measurement unit (IMU) may be used as the sensor 335.

The control unit 107 can control the return valve 513 to have a third opening amount at least when the predetermined portion of the working device is at the third position, and can control the return valve 513 to have a fourth opening amount when the predetermined portion of the working device is at the fourth position, wherein the fourth position is at lower height than the third position, and the fourth opening amount may be larger than the third opening amount.

The third and fourth positions may be lower than the preset reference height. The reference height is the floor height of the working machine, and the third and fourth positions may be lower than the floor of the working machine.

In some embodiments, when a predetermined portion of the working device is at a position higher than or equal to a reference height, the control unit 107 controls the return valve 513 so that the return valve 513 has a constant opening amount, wherein the constant opening amount may be smaller than both the third opening amount and the fourth opening amount.

As the position of the predetermined portion of the working device detected by the sensor is lower, the control unit 107 can control the return valve 513 so that the return valve 513 has a larger opening amount. For example, during a boom down operation, the opening amount of the return valve 513 is maintained constant until the bucket reaches the floor height of the working machine, and then, as the bucket goes below the floor height of the working machine, the opening amount of the return valve 513 is gradually increased.

The predetermined portion of the working device may be a terminal portion of the working device, and the terminal portion of the working device may be a bucket, particularly the end of the bucket tip.

For example, when the position of the end of the bucket tip is higher than or equal to the floor of the working device, the back pressure by the accumulator will be low, so even if the opening amount of the return valve 513 is 10%, a sufficiently fast boom down speed can be achieved while rapid pressure accumulation within the accumulator is possible. However, for example, as the position of the end of the bucket tip becomes lower than the floor of the working device and becomes deeper (for example, when the boom is lowered by its own weight below the ground level for subsequent digging after a previous digging operation has been carried out and excavated soil has been transferred to a vehicle), the back pressure due to the fluid accumulated in the accumulator gradually increases, so the opening amount of the return valve 513 is relatively increased to prevent a decrease in boom down speed, thereby improving the boom down control performance.

By utilizing the digging assist function, the position of the end of the bucket tip is input in real time from a sensor 335, and the opening amount of the return valve 513 increases as the digging depth goes deeper, automatically controlling the boom down speed, thereby efficiently charging the accumulator while performing smooth boom down operation. This can enable efficient energy savings under any work conditions.

The terms used herein are for the purpose of describing certain aspects only and are not intended to limit the present disclosure. Unless the context explicitly indicates otherwise, plural forms may be included even if written in sigular form. Additionally, the term "and/or" includes any and all combinations of one or more of the associated listed items. The term "comprising" specifies the presence of stated features, integers, steps, operations, elements and/or components, but does not preclude the presence or addition of one or more other features, integers, steps, operations, elements, components and/or groups thereof.

Comparative terms such as "below," "above," "further up," "further down," "horizontal," or "vertical" may be used herein to describe the relationship of any element depicted in the drawings to another element. These terms and the foregoing may include other orientations of the device as well as the orientation depicted in the drawings. When an element is referred to be connected or coupled to another element, this may mean not only a direct connection, but also other intervening elements. On the other hand, when an element is referred to be directly connected or coupled to another element, it implies that there are no intervening elements.

Unless otherwise defined, all terms (including technical and scientific terms) used herein have the same meaning as commonly understood by a person of ordinary skill in the art to which the present disclosure belongs. The terms used herein should be interpreted to have meanings consistent with their meanings in the context of this specification and the related art, and will not be interpreted in an idealized or overly formal sense, unless expressly defined herein.

The present disclosure is not limited to the aspects described above and illustrated in the drawings, but rather, those skilled in the art should appreciate that various changes and modifications may be made within the scope of the present disclosure and the appended claims. While many aspects have been disclosed in the drawings and specification for purposes of illustration and not limitation, the scope of the present inventive concept is set forth in the claims that follow.

## Claims

1. A working machine comprising:
a tank,
a working device including an actuator;
an accumulator;
a recovery path connecting the actuator and the accumulator;
a return valve installed between the recovery path and the tank to control the flow rate of fluid discharged from the recovery path to the tank;
a command generating device that generates a command;
a control unit that receives the command from the command generating device and controls the return valve so that the return valve has an opening amount corresponding to the command according to a preset relationship, thereby adjusting the operating speed of the actuator and the charging speed of the accumulator.

2. The working machine of claim 1,
wherein the command generating device is a first operator input device that receives a request from an operator for one of the operating speed of the actuator, the charging speed of the accumulator, and the opening amount of the return valve, and
wherein the control unit controls the opening amount of the return valve according to the request.

3. The working machine of claim 2,
wherein the first operator input device selectively receives, from the operator, at least a request for a first operating speed and a request for a second operating speed of the actuator and the second operating speed is faster than the first operating speed, and
wherein the control unit controls the return valve to have a first opening amount according to the request for the first operating speed and controls the return valve to have a second opening amount according to the request for the second operating speed, wherein the second opening amount is larger than the first opening amount.

4. The working machine of claim 3,
wherein, as the requested operating speed input to the first operator input device becomes faster,
the control unit controls the return valve so that the return valve has a larger opening amount.

5. The working machine of claim 1,
wherein the command generating device is a sensor that detects the position of a predetermined portion of the working device, and
wherein the control unit controls the opening amount of the return valve according to the position of the predetermined portion of the working device detected by the sensor.

6. The working machine of claim 5,
wherein the predetermined portion of the working device is a bucket.

7. The working machine of claim 5,
wherein the control unit at least controls the return valve to have a third opening amount when the predetermined portion of the working device is at a third position, and controls the return valve to have a fourth opening amount when the predetermined portion of the working device is at a fourth position, wherein the fourth position is at lower height than the third position and the fourth opening amount is larger than the third opening amount .

8. The working machine of claim 7,
wherein, as the position of the predetermined portion of the working device detected by the sensor becomes lower,
the control unit controls the return valve so that the return valve has a larger opening amount.

9. The working machine of claim 7,
wherein the third position and the fourth position are positions lower than the preset reference height.

10. The working machine of claim 9,
wherein the reference height is the floor height of the working machine, and the third position and the fourth position are positions lower than the floor of the working machine.

11. The working machine of claim 9,
wherein, when the predetermined portion of the working device is at a position higher than or equal to the reference height, the control unit controls the return valve so that the return valve has a constant opening amount, and wherein the constant opening amount is smaller than both the third opening amount and the fourth opening amount.

12. The working machine of claim 1,
wherein the actuator is a boom actuator,
wherein the working machine further includes a second operator input device that receives a request for raising/lowering the boom of the boom actuator from an operator, and
wherein the flow of fluid from the boom actuator to the recovery path only occurs when a boom down request to lower the boom is input to the second operator input device.

13. The working machine of claim 12,
further comprising a third operator input device for receiving an energy recovery function activation request from an operator to activate an energy recovery function for recovering energy from fluid discharged from the boom actuator,
wherein the flow of fluid from the boom actuator to the recovery path only occurs when the energy recovery function activation request is input to the third operator input device.

14. The working machine of claim 13,
further comprising
a directional control valve installed between the boom actuator and the tank to selectively discharge fluid from the boom actuator to the tank,
wherein, when the energy recovery function activation request is input to the third operator input device and the boom down request is input to the second operator input device, the directional control valve prevents fluid from being discharged from the boom actuator to the tank.

15. The working machine of claim 13,
further comprising
a pump that draws and pressurizes fluid from the tank, and
a directional control valve installed between the pump and the boom actuator to selectively supply pressurized fluid from the pump to the boom actuator,
wherein, when the energy recovery function activation request is input to the third operator input device and the boom down request is input to the second operator input device, the directional control valve prevents pressurized fluid from being supplied from the pump to the boom actuator.

16. The working machine of claim 13,
further comprising
a directional control valve installed between the boom actuator and the tank to selectively discharge fluid from the boom actuator to the tank,
wherein, when the boom down request is input to the second operator input device while the energy recovery function activation request is not input to the third operator input device, the directional control valve causes fluid to be discharged from the boom actuator to the tank.

17. The working machine of claim 13,
further comprising
a pump that draws and pressurizes fluid from the tank, and
a directional control valve installed between the pump and the boom actuator to selectively supply pressurized fluid from the pump to the boom actuator,
wherein, when the boom down request is input to the second operator input device while the energy recovery function activation request is not input to the third operator input device, the directional control valve causes pressurized fluid to be supplied from the pump to the boom actuator.

18. The working machine of claim 1,
wherein the actuator is a boom actuator having a bottom chamber and a load chamber,
wherein the recovery path is connected to the bottom chamber.

19. The working machine of claim 1,
further comprising an assist motor connected to the accumulator.

20. The working machine of claim 1,
wherein the actuator is a boom actuator,
wherein the operating speed of the actuator is the speed at which the boom of the boom actuator is lowered.
